**Europäisches Patentamt**

**European Patent Office**

**Office européen des brevets**

(19)

(11) Veröffentlichungsnummer: **0 206 018**
**B1**

# EUROPÄISCHE PATENTSCHRIFT

(12)

(45) Veröffentlichungstag der Patentschrift:
**11.01.89**

(21) Anmeldenummer: **86107553.9**

(22) Anmeldetag: **03.06.86**

(51) Int. Cl.⁴: **B65D 83/14**

(54) **Ventil für Chemikalienbehälter.**

(30) Priorität: **11.06.85 DE 3520795**

(43) Veröffentlichungstag der Anmeldung:
**30.12.86 Patentblatt 86/52**

(45) Bekanntmachung des Hinweises auf die Patenterteilung:
**11.01.89 Patentblatt 89/2**

(84) Benannte Vertragsstaaten:
**AT CH DE FR GB IT LI NL**

(56) Entgegenhaltungen:
**AT-B- 342 448**
**DE-A- 2 944 706**
**GB-A- 2 002 326**
**US-A- 1 553 113**
**US-A- 2 717 804**
**US-A- 4 134 522**

(73) Patentinhaber: **Merck Patent Gesellschaft mit beschränkter Haftung, Frankfurter Strasse 250, D-6100 Darmstadt(DE)**

(72) Erfinder: **Joseph, Frank, Breslauer Strasse 11a, D-6084 Gernsheim(DE)**
Erfinder: **Krauss, Helmuth, Dr., Gerhard Hauptmann-Strasse 5, D-6148 Heppenhelm(DE)**
Erfinder: **Müller, Peter, Kleiststrasse 14, D-6100 Darmstadt 12(DE)**
Erfinder: **Kreher, Klaus, Bahnhofsplatz 22, D-6115 Münster(DE)**

## Beschreibung

Die Erfindung betrifft ein Ventil für Chemikalienbehälter zur Entnahme von flüssigen oder gasförmigen chemischen Produkten unter gleichzeitiger Zufuhr eines Schutzgases, mit einem Ventilgehäuse, das Zuleitungen und Ableitungen für das Produkt und für das Gas aufweist, und mit einem in einer Bohrung des Ventilgehäuses bewegbaren Ventilkörper.

Die beispielsweise für die Halbleiterfertigung benötigten Substanzen sind überwiegend giftig und/oder aggresiv. Verunreinigungen der zur Lagerung und zum Transport dieser Flüssigkeiten verwendeten Behälter und/oder der angeschlossenen Dotier- oder Epitaxieanlagen würden zu erheblichen Störungen des Verarbeitungsvorganges führen und müssen deshalb ausgeschlossen werden. Für diese Anwendungsfälle werden Ventile der genannten Art verwendet. Das zugeführte Schutzgas, beispielsweise ein Inertgas, dient zur Förderung des zu entnehmenden flüssigen oder gasförmigen Produktes und wird in den meisten Fällen auch dazu verwendet, nach einem Entnahmevorgang die angeschlossenen Leitungen zu spülen.

In der Faseroptik-Technologie werden zum Versand und zur Lagerung von Säurechloriden Glasbehälter oder insbesondere für Siliciumtetrachlorid Edelstahlbehälter eingesetzt. Während bei Edelstahlbehältern üblicherweise Kugelventile aus Stahl verwendet werden, werden bei Glasbehältern Kükenventile eingesetzt, bei denen zwar eine Möglichkeit des Spülens mit einem Schutzgas gegeben ist, die aber häufig keine ausreichende Dichtigkeit wegen der verhältnismäßg niedrigen Flächenpressung im Ventilbereich gewährleisten. Auch andere Ventile aus Glas und/oder PTFE werden für derartige Anwendungsfälle eingesetzt.

Aufgabe der Erfindung ist es, ein Ventil der eingangs genannten Gattung zu schaffen, das bei einfachem und platzsparendem Aufbau eine vollständige Abdichtung gewährleistet.

Diese Aufgabe wird erfindungsgemäß dadurch gelöst, daß das Ventil ein Schieberventil mit einem in der Bohrung des Ventilgehäuses axial bewegbaren zylindrischen Ventilschieber ist, daß der Ventilschieber eine erste Ringnut aufweist, die in der Öffnungsstellung des Ventils die Produktzuleitung mit der Produktableitung verbindet, daß der Ventilschieber eine zweite Ringnut aufweist, die in der Öffnungsstellung des Ventils die Gaszuleitung mit der Gasableitung verbindet, daß auf der der zweiten Ringnut gegenüberliegenden Seite der ersten Ringnut eine dritte Ringnut angeordnet ist, die mit der zweiten Ringnut durch eine zentrale Bohrung im Ventilschieber verbunden ist und somit ebenfalls mit inertem Gas gleichen Überdruckes entsprechend den Druckverhältnissen der chemikalienführenden Ringnut beaufschlagt gegen Kontamination von außen oder nach außen dieselbe kapselt und daß alle Ringnuten (14, 15, 19) axial durch Dichtringe (20) abgedichtet sind.

Durch die Anordnung der beiden mit Schutzgas beaufschlagten Ringnuten beiderseits der das zu entnehmende Produkt führenden Ringnut wird sicher verhindert, daß Spuren des Produktes austreten können oder daß Verunreinigungen von außen her in die produktführenden Kanäle eindringen können. Das Schutzgas, durch das das Produkt aus dem Behälter herausgefördert wird, steht unter dem gleichen Druck wie das Produkt, so daß an den das Produkt abschließenden Dichtflächen kein innerer Überdruck entsteht, durch den das Produkt austreten könnte.

Die Ausbildung des bewegbaren Ventilkörpers als Ventilschieber ermöglicht es, auf kleinstem Raum nebeneinander die Ventilsteuerfunktionen auszuführen, die erforderlich sind, um einerseits das Produkt aus dem Behälter zu entnehmen und andererseits gleichzeitig das Schutzgas zuzuführen, das zugleich zu einer wesentlichen Verbesserung der Abdichtwirkung eingesetzt wird.

Gemäß einer bevorzugten Ausführungsform des Erfindungsgedankens ist vorgesehen, daß die dritte Ringnut in der geschlossenen Ventilstellung mit der Produktableitung verbunden ist. Dadurch wird in konstruktiv sehr einfacher Weise eine Spülmöglichkeit geschaffen, d.h. eine Spülung des Ventilsystems ermöglicht. Das zugeführte Schutzgas, vorzugsweise ein Inertgas, strömt durch die Gaszuleitung in die zweite Ringnut, die sich auf der einen Seite der produktführenden ersten Ringnut befindet, von dort durch die zentrale Bohrung des Ventilschiebers in die auf der anderen Seite angeordnete dritte Ringnut und von dort in die Produktableitung. Alle diese Kanäle werden daher in der geschlossenen Ventilstellung durch das Schutzgas gespült.

Weitere vorteilhafte Ausgestaltungen des Erfindungsgedankens sind Gegenstand weiterer Unteransprüche. Die Erfindung wird nachfolgend an einen Ausführungsbeispiel näher erläutert, das in der Zeichnung dargestellt ist. Es zeigt:

Fig. 1 eine Seitenansicht eines Ventils für einen Chemikalienbehälter,
Fig. 2 einen Schnitt längs der Linie II–II in Fig. 1 in der geöffneten Ventilstellung und
Fig. 3 einen Schnitt längs der Linie II–II in Fig. 1 in der geschlossenen Ventilstellung.

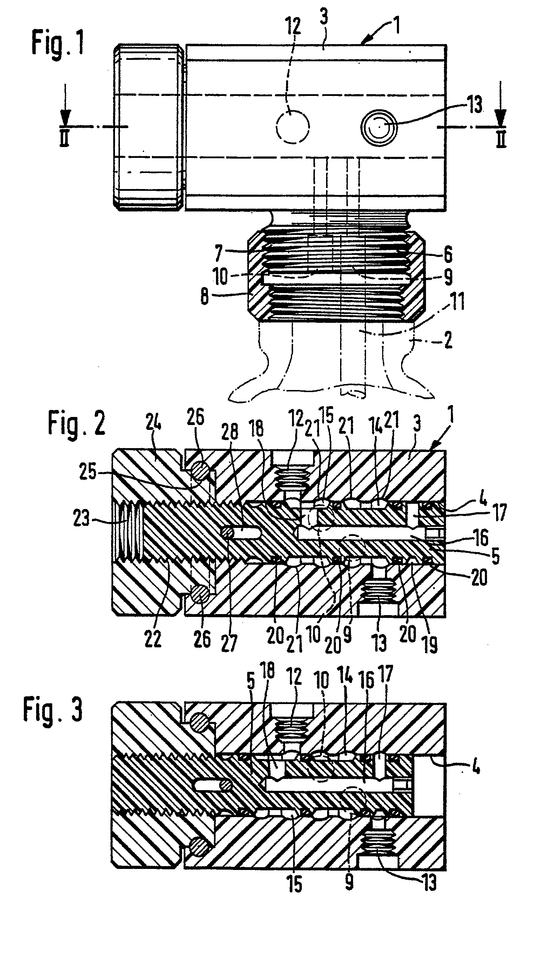

Das in der Zeichnung dargestellte Ventil 1 dient zur Entnahme von chemisch aggressiven und hochreinen Chemikalien in flüssiger Form oder Gasform aus einem Behälter 2, der in Fig. 1 mit strichpunktierten Linien nur teilweise angedeutet ist. Das Ventil 1 weist ein Ventilgehäuse 3 auf mit einer zentralen Bohrung 4, in der ein zylindrischer Ventilschieber 5 axial bewegbar aufgenommen ist.

An der Unterseite des Ventilgehäuses 3 ist ein Anschlußstutzer 6 angeordnet, der ein Außengewinde 7 aufweist, das eine Überwurfmutter 8 trägt, die zur Verbindung mit dem Behälter 2 dient. Die Überwurfmutter 8 weist einen oberen Gewindeabschnitt mit Linksgewinde und einen unteren Gewindeabschnitt mit Rechtsgewinde auf. Die so geschaffene Rechts-Links-Verschraubung ermöglicht eine sichere Positionierung des Ventils 1 auf dem Behälter 2.

In der Stirnfläche des Anschlußstutzens 6 münden in axialem Abstand nebeneinander eine Produktzuleitung 9 und eine Gasableitung 10, die jeweils ein Gewinde aufweisen, in das wahlweise ein in Fig. 1 nur mit strichpunktierten Linien angedeutetes Tauchrohr 11 eingeschraubt werden kann, das in die im Behälter 2 aufgenommene Flüssigkeit taucht.

Horizontal münden in die Bohrung 4 des Ventilgehäuses 3 beiderseits der Mündungen der Produktzuleitung 9 und der Gasableitung 10 eine Gaszuleitung 12 bzw. eine Produktableitung 13. Der Ventilschieber 5 weist eine erste Ringnut 14 auf, die in der geöffneten Stellung des Ventils 1 (Fig. 2) die Produktzuleitung 9 mit der Produktableitung 13 verbindet. Auf der einen Seite der ersten Ringnut 14 ist eine zweite Ringnut 15 angeordnet, die in der geöffneten Stellung des Ventils 1 (Fig. 2) die Gaszuleitung 12 mit der in den Behälter 2 mündenden Gasableitung 10 verbindet. Da bei dem dargestellten Beispiel das Tauchrohr 11 in die Produktableitung 9 eingeschraubt ist, steigt das durch das zugeführte Inertgas oder andere Schutzgas verdrängte flüssige Produkt im Tauchrohr 11 hoch und gelangt in die Produktableitung 13. Wäre dagegen das Tauchrohr 11 in die Gaszuleitung 10 eingeschraubt, so würde das Blasen des zugeführten Gases im flüssigen Produkt aufsteigen und durch die Produktableitung 9 würde das gasförmige oder dampfförmige Produkt in die Produktableitung 13 austreten. Dieser Entnahmevorgang wird als "Bubbeln" bezeichnet.

Über eine zentrale Bohrung 16 und kurze radiale Bohrungen 17, 18 sind die zweite Ringnut 15 und eine dritte Ringnut 19 miteinander verbunden, die sich auf der der zweiten Ringnut 15 abgekehrten Seite der ersten Ringnut 14 befindet. Die beiden beiderseits der produktführenden Ringnut 14 befindlichen Ringnuten 15 und 19 sind daher mit dem Schutzgas beaufschlagt und verhindern ein seitliches Austreten des Produktes.

Alle Ringnuten 14, 15 und 19 sind axial durch Dichtringe 20 abgedichtet, die vorzugsweise als O-Ringe ausgeführt sind. Im Bereich der Einmündungen der Zu- bzw. Ableitungen 9, 10, 12 und 13 weist die Bohrung 4 des Ventilgehäuses 3 jeweils eine flache Umfangsnut 21 auf. Dadurch wird die Reibung der Dichtringe 20 bei der Bewegung des Ventilschiebers 5 zwischen seinen beiden Endstellungen verringert.

Der Ventilschieber 5 ist an seinem einen Ende mit einem Außengewinde 22 versehen, das mit einem Innengewinde 23 einer Betätigungsmutter 24 in Eingriff steht, die am Ventilgehäuse 3 drehbar, jedoch axial unverschiebbar gelagert ist. Hierzu weist ein Ansatz der Betätigungsmutter 24 eine Umfangsnut 25 auf, in die Stifte 26 greifen, die in das Ventilgehäuse 3 eingeführt sind.

Ein Querstift 27, der im Ventilgehäuse 3 angeordnet ist, ragt durch einen Längsschlitz 28 des Ventilschiebers 5. Dadurch wird der Ventilschieber 5 undrehbar geführt. Die Länge des Längsschlitzes 28 begrenzt die axiale Bewegbarkeit des Ventilschiebers 5.

Durch eine Drehung der Betätigungsmutter 24 wird der Ventilschieber 5 in die Fig. 3 gezeigte geschlossene Ventilstellung gebracht. In dieser geschlossenen Ventilstellung überdeckt die erste Ringnut 14 die Produktzuleitung 9 und die Gasableitung 10, d.h. die beiden an den Behälter 2 angeschlossenen Leitungen 9 und 10 sind miteinander verbunden, jedoch nach außen abgeschlossen. In dieser Stellung befindet sich die dritte Ringnut 19 über der Produktableitung 20, so daß eine direkte gasführende Verbindung von der Gaszuleitung 12 über die Ringnut 15, die zentrale Bohrung 16, die Ringnut 19 und die Produktableitung 13 hergestellt ist. Auf diese Weise können diese Kanäle mit dem Schutzgas gespült werden.

Ebenso wie in der geöffneten Stellung des Ventils sind auch in der geschlossenen Stellung die Ventilräume beiderseits der einmündenden Leitungen 9 und 10 mit Schutzgas beaufschlagt und somit gegen eine Kontamination von außen oder nach außen gekapselt. Diese Funktion des Ventils ist sowohl bei der Flüssigkeitsentnahme als auch bei der Gas- bzw. Dampfentnahme durch wahlweise Anordnung des Tauchrohres 11 auf der Leitung 9 oder 10 gewährleistet.

Vorzugsweise bestehen alle Ventilbauteile aus chemikalienbeständigen Kunststoffen, beispielsweise PTFE und/oder PVDF.

**Patentansprüche**

1. Ventil für Chemikalienbehälter zur Entnahme von flüssigen oder gasförmigen chemischen Produkten unter gleichzeitiger Zufuhr eines Schutzgases, mit einem Ventilgehäuse, das Zuleitungen und Ableitungen für das Produkt und für das Gas aufweist, und mit einem in einer Bohrung des Ventilgehäuses bewegbaren Ventilkörper, dadurch gekennzeichnet, daß es ein Schieberventil mit einem in der Bohrung (4) des Ventilgehäuses (3) axial bewegbaren zylindrischen Ventilschieber (5) ist, daß der Ventilschieber (5) eine erste Ringnut (14) aufweist, die in der Öffnungsstellung des Ventils die Produktzuleitung (9) mit der Produktableitung (13) verbindet, daß der Ventilschieber (5) eine zweite Ringnut (15) aufweist, die in der Öffnungsstellung des Ventils die Gaszuleitung (12) mit der Gasableitung (10) verbindet, daß auf der der zweiten Ringnut (15) gegenüberliegenden Seite der ersten Ringnut (14) eine dritte Ringnut (19) angeordnet ist, die mit der zweiten Ringnut (15) durch eine zentrale Bohrung (16) im Ventilschieber (5) verbunden ist und daß alle Ringnuten (14, 15, 19) axial durch Dichtringe (20) abgedichtet sind.

2. Ventil nach Anspruch 1, dadurch gekennzeichnet, daß die dritte Ringnut (19) in der geschlossenen Ventilstellung mit der Produktableitung (13) verbunden ist.

3. Ventil nach Anspruch 1, dadurch gekennzeichnet, daß die Gasableitung (10) und die Produktzuleitung (9) in axialem Abstand nebeneinander angeordnet sind und in einen gemeinsamen Behälteranschlußstutzen (6) münden und jeweils Gewinde zum wahlweisen Anschluß eines Tauchrohres (11) aufweisen.

4. Ventil nach Anspruch 1, dadurch gekennzeichnet, daß die Bohrung (4) des Ventilgehäuses (3) jeweils eine flache Umfangsnut (21) im Bereich jeder Zu- und Ableitung (9, 10, 12, 13) aufweist.

5. Ventil nach Anspruch 1, dadurch gekennzeichnet, daß der Ventilschieber (5) undrehbar im Ventilgehäuse (3) geführt ist und an einem Ende ein Außengewinde (22) aufweist, das mit einem Innengewinde (23) einer am Ventilgehäuse (3) drehbar, jedoch axial unverschiebbar gelagerten Betätigungsmutter (24) in Eingriff steht.

6. Ventil nach Anspruch 1, dadurch gekennzeichnet, daß alle Ventilbauteile aus chemikalienbeständigen Kunststoffen bestehen.

7. Ventil nach Anspruch 1, dadurch gekennzeichnet, daß die Dichtringe (20) O-Ringe sind.

## Claims

1. Valve for chemical containers for withdrawing liquid or gaseous chemical products while at the same time supplying a protective gas, with a valve housing which has supply lines and withdrawal lines for the product an the gas, and with a movable valve body in a boring in the valve housing, characterized in that it is a sliding valve with a cylindrical valve spool (5) which can move axially in the boring (4) in the valve housing (3), in that the valve spool (5) has a first annular groove (14) which, in the open position of the valve, connects the product supply line (9) to the product withdrawal line (13), in that the valve spool (5) has a second annular groove (15) which, in the open position of the valve, connects the gas supply line (12) to the gas withdrawal line (10), in that on the opposite side of the first annular groove (14) to the second annular groove (15) there is a third annular groove (19) which is connected to the second annular groove (15) by a central boring (16) in the valve spool (5), and in that all annular grooves (14, 15, 19) are sealed axially by sealing rings (20).

2. Valve according to claim 1, characterized in that in the closed position of the valve the third annular groove (19) is connected to the product withdrawal line (13).

3. Valve according to claim 1, characterized in that the gas withdrawal line (10) and the product supply line (9) are arranged axially adjacent to each other and terminate in a common container connection branch (6), each having a thread for the connection, as selected, of a dip tube (11).

4. Valve according to claim 1, characterized in that in the region of each of the supply and withdrawal lines (9, 10, 12, 13) the boring (4) of the valve housing (3) has a shallow circumferential groove (21).

5. Valve according to claim 1, characterized in that the valve spool (5) is fixed in the valve housing (3) so that it cannot be rotated and has at one end an external thread (22) which is engaged in an internal thread (23) of an actuating nut (24) which is fixed in the valve housing (3) so that it can be rotated but not moved axially.

6. Valve according to claim 1, characterized in that all valve components are made from chemically-resistant synthetic materials.

7. Valve according to claim 1, characterized in that the sealing ring (20) are O-rings.

## Revendications

1. Vanne pour récipients de produits chimiques, destinée au prélèvement de produits chimiques liquides ou gazeux avec introduction simultanée d'un gaz protecteur, comprenant un corps de vanne qui présente lui-même des conduits d'arrivée et de départ pour le produit et pour le gaz, et un élément obturateur de vanne qui peut se déplacer dans un perçage du corps de la vanne, caractérisée en ce qu'elle est constituée par une vanne à tiroir comprenant un tiroir de vanne (5) cylindrique, mobile dans la direction axiale dans le perçage (4) du corps (3) de la vanne, en ce que le tiroir (5) de la vanne présente une première gorge annulaire (14) qui, dans la position d'ouverture de la vanne, relie la conduite (9) d'arrivée du produit à la conduite (13) de départ du produit, en ce que le tiroir (5) de la vanne présente une deuxième gorge annulaire (15) qui, dans la position d'ouverture de la vanne, relie la conduite d'arrivée du gaz (12) à la conduite de départ du gaz (10), en ce que, sur le côté de la première gorge annulaire (14) qui est à l'opposé de la deuxième gorge (15), est prévue une troisième gorge annulaire (19) qui est reliée à la deuxième gorge annulaire (15) par un perçage central (16) formé dans le tiroir (5) de la vanne et en ce que toutes les gorges annulaires (14, 15, 19) sont fermées à joint étanche dans la direction axiale par des bagues d'étanchéité (20).

2. Vanne selon la revendication 1, caractérisée en ce que la troisième gorge annulaire (19) est reliée à la conduite de départ du produit (13) dans la position fermée de la vanne.

3. Vanne selon la revendication 1, caractérisée en ce que la conduite de départ du gaz (10) et la conduite d'arrivée du produit (9) sont disposées l'une à côté de l'autre à un certain espacement axial, débouchent dans une tubulure commune (6) de raccordement au récipient et présentent chacune un filetage permettant d'y raccorder facultativement un tube plongeur (11).

4. Vanne selon la revendication 1, caractérisée en ce que le perçage (4) du corps (3) de la vanne présente une gorge circonférentielle plate (21) dans la région de chaque conduite d'arrivée ou de départ (9, 10, 12, 13).

5. Vanne selon la revendication 1, caractérisée en ce que le tiroir (5) est guidé le corps (3) de la vanne de façon à être immobilisé en rotation et présente à une extrémité un filetage extérieur (22) qui est en prise avec le filetage intérieur (23) d'un écrou de manoeuvre (24) qui est monté sur le corps (3) de la vanne libre en rotation mais immobilisé en translation axiale.

6. Vanne selon la revendication 1, caractérisée en ce que tous les composants de la vanne sont faits de matières plastiques résistantes aux produits chimiques.

7. Vanne selon la revendication 1, caractérisée en ce que les bagues d'étanchéité (20) sont des bagues toriques.

Fig. 1

Fig. 2

Fig. 3